# EUROPEAN PATENT SPECIFICATION

(11) **EP 3 288 735 B1**
(45) Date of publication and mention of the grant of the patent: **03.07.2024**
(21) Application number: 16719155.0
(22) Date of filing: 22.03.2016
(51) Int. Cl.: B29B 7/74, B29C 48/385, B29B 7/44, B29C 48/76, B29C 48/285, B29C 48/375, B29C 48/295

(54) **PROCESS FOR HALOGENATING OLEFINIC-DERIVED ELASTOMERS IN THE BULK PHASE**
VERFAHREN ZUR HALOGENIERUNG VON OLEFINISCHEN ELASTOMEREN IN DER BULKPHASE
PROCÉDÉ D'HALOGÉNATION D'ÉLASTOMÈRES OLÉFINIQUES DANS LA PHASE VOLUMIQUE

(30) Priority: 30.04.2015 US 201562155047 P
(43) Date of publication of application: 07.03.2018
(73) Proprietor: ExxonMobil Chemical Patents Inc., Baytown, TX 77520 (US)
(72) Inventor: HEMBREE, Richard D., Houston, TX 77044 (US); McDONALD, Michael F. Jr., Kingwood TX 77345 (US); MAIER, Joseph A., Houston, TX 77007 (US); GU, Leming, Pearland, TX 77584 (US); WANG, Yu Feng, Houston, TX 77062 (US)
(74) Representative: ExxonMobil Chemical Europe LLC
(86) International application number: PCT/US2016/023509
(87) International publication number: WO 2016/175938

(56) References cited:
- EP-A1- 0 209 253
- EP-A2- 1 127 609
- WO-A1-2006/034875
- WO-A1-2011/117280
- DE-A1-102013 111 066
- US-A- 4 650 832

## Description

### CROSS-REFERENCE TO RELATED APPLICATIONS

This application claims the benefit of priority from U.S. Provisional Application No. 62/155,047 filed April 30, 2015.

### FIELD OF THE INVENTION

This disclosure relates to a process for halogenating olefinic-derived elastomer (e.g. butyl rubber) in the bulk phase. In particular embodiments, a gas-phase halogenating agent is reacted with bulk-phase elastomer within a continuous process.

### BACKGROUND OF THE INVENTION

Butyl rubber generally refers to copolymers synthesized from a polymerization reaction mixture including an isoolefin such as isobutylene and a conjugated diene such as isoprene. Butyl rubber is often classified into a larger group of polymers referred to as isobutylene-based elastomers. The synthesis of isobutylene-based elastomers is well known and described in numerous publications such as, for example, U.S. Patent Nos. 2,356,128, 4,474,924, 4,068,051, 7,232,872, and 7,414,101.

Isobutylene-based elastomers, such as butyl rubber, contain a small percentage of unsaturation deriving from the polymerization of isoprene. This unsaturation is generally randomly distributed throughout the polymer chain. As a result, the reactivity of isobutylene-based elastomers, and consequently their cure rate, is substantially less than highly unsaturated natural and synthetic rubbers. In an effort to improve cure characteristics of isobutylene-based elastomers, isobutylene-based elastomers are often halogenated.

While many halogenation processes have been proposed for isobutylene-based elastomers, most commercial processes halogenate isobutylene-based elastomers in the liquid phase. For example, U.S. Patent No. 3,099,644, teaches a process for the bromination of isobutylene-based elastomers while the isobutylene-based elastomer is in solution. Halogenation of isobutylene copolymers is also described in U.S. Patent No. 5,670 582.

Despite commercial practices, the possibility of producing halogenated butyl rubber through processes that employ bulk-phase butyl rubber has been proposed. For example, U.S. Patent Nos. 4,513,116 and 4,563 506, teach a process for the continuous bromination of butyl rubber by contacting the butyl rubber with a brominating agent in a continuous flow device while the butyl rubber is in its bulk phase. Specifically, this patent teaches that the continuous flow devices may include kneaders, extruders, and continuous mixers that are capable of subjecting the butyl rubber to deformation. These continuous flow devices are adapted to include multiple reaction zones including a first reaction zone where the butyl rubber is contacted with a brominating agent and a downstream neutralization zone where byproducts of the bromination reaction are released from the brominated butyl rubber product and removed from the continuous flow device. WO 2015-51885 discloses a system wherein, following slurry polymerization of a butyl rubber and removal of some or all of the diluent, the butyl solids are mixed with 5 to 10% liquid and then halogenated in a kneader and the halogenated rubber is neutralized in a second kneader with water simultaneous with the removal of remaining halogenating agents and gas by-products. However, this system still includes residual diluent in the halogenation kneader and fails to consider the temperature sensitives of the materials and the corrosive nature of the halogenating agent.

Because there remains ongoing desires to brominate butyl rubber while the butyl rubber remains in the bulk phase, there remains a need for technologically useful processes to accomplish this goal.

### SUMMARY OF THE INVENTION

Described herein is a process for halogenating an olefin-based elastomer while the olefinic-based elastomer is in the bulk phase using a system (11) comprising:
(i) a first extruder (20);
(ii) a first kneader vessel (40) having an inlet (42) and an outlet (44) downstream of said first extruder (20) and in fluid communication with said first extruder (20) via a conduit (30) and the inlet (42), where said first kneader (40) vessel is a sealed vessel that is adapted to maintain gaseous reactants that are introduced into said kneader vessel;
(iii) a second extruder (60) downstream of said first kneader vessel (40) and in fluid communication with the outlet (44) of said first kneader vessel (40);
(iv) a second kneader vessel (80) downstream of said second extruder (60) and in fluid communication with said second extruder (60); and
(v) a third extruder (100) downstream of said second kneader vessel (180) and in fluid communication with said second kneader vessel (80);
the process comprising:
reacting an olefinic-based elastomer substantially in the bulk phase with a halogenating agent within the first kneader reactor to produce halogenated olefinic-based elastomer and by-products of a halogenation reaction, wherein said first extruder (20) is arranged and operated to convert the olefin-based elastomer into a compacted, continuous solid mass that occupies the entire cross-sectional area of at least a portion of the conduit (30), thereby serving to seal the first kneader vessel (40) at the inlet (42) and wherein said second extruder (60) is adapted and operated to compact and accumulate the halogenated olefinic-based elastomer product discharged from the first kneader vessel (40) to fill a cross-sectional area of the second extruder (60), thereby providing a seal to the outlet (44) of the first kneader vessel (40); and
separating the halogenated olefinic-based elastomer from at least a portion of the by-products of the halogenation reaction within the second kneader vessel,
wherein said second kneader vessel (80) operates at a lower pressure than said first kneader vessel (40) and wherein any water present is present at not more than 10,000 ppm.

These and other features, aspects, and advantages of the present disclosure will become better understood with regard to the following description and appended claims.

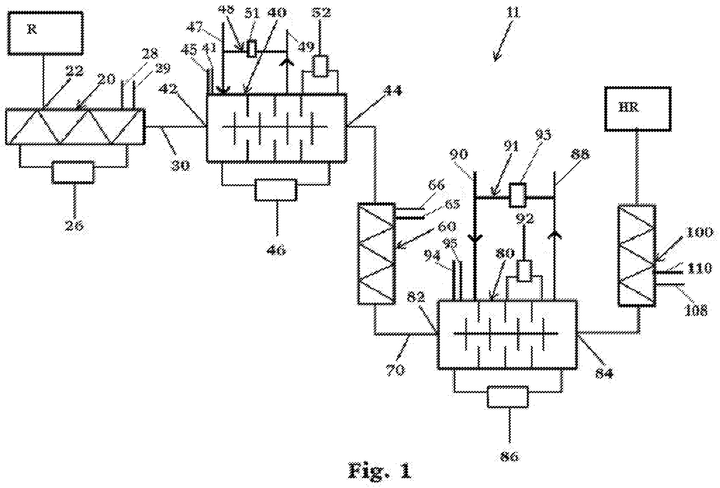

### BRIEF DESCRIPTION OF THE FIGURE

The Figure is a schematic diagram of a system and process according to one or more embodiments of this invention.

### DETAILED DESCRIPTION OF ILLUSTRATIVE EMBODIMENTS

Various specific embodiments, versions and examples of the invention will now be described, including preferred embodiments and definitions that are adopted herein for purposes of understanding the claimed invention. While the following detailed description gives specific preferred embodiments, those skilled in the art will appreciate that these embodiments are exemplary only, and that the invention can be practiced in other ways. For purposes of determining infringement, the scope of the invention will refer to any one or more of the appended claims.

Definitions applicable to the presently described invention are as described below.

The term "elastomer," as used herein, generally refers polymers consistent with the ASTM D 1566 definition of "a material that is capable of recovering from large deformations, and can be, or already is, modified to a state in which it is essentially insoluble (but can swell) in boiling solvent." As used herein, the term "elastomer" may be used interchangeably with the term "rubber." Elastomers may have a melting point that cannot be measured by DSC or if it can be measured by DSC is less than 40° C., or less than 20° C., or less than 0° C. Elastomers may have a Tg of-50° C. or less as measured by DSC. Exemplary elastomers may be characterized by a molecular weight distribution (Mw/Mn) of less than 10, alternatively less than 5, alternatively less than 2.5, an exemplary viscosity average molecular weight in the range of 200,000 up to 2,000,000 and an exemplary number average molecular weight in the range of 25,000 to 750,000 as determined by gel permeation chromatography.

The term "olefinic-based elastomer," as used herein, refers to elastomers derived from the polymerization of monomer including an olefin and optionally monomer copolymerizable therewith. The term "olefin-based elastomer" may be used interchangeably with the term "olefinic-derived elastomer." Useful olefins include, but not limited to, monoolefins and multiolefins. Monoolefins include, but are not limited to, normal olefins such as ethene and propene, and isoolefins such as isobutylene, isobutene, 2-methyl-1-butene, 3-methyl-1-butene, 2-methyl-2-butene, 1-butene, 2-butene, methyl vinyl ether, indene, vinyltrimethylsilane, hexene, and 4-methyl-1-pentene. Exemplary multiolefins include, but are not limited to, C₄ to C₁₄ multiolefin monomers such as isoprene, butadiene, 2,3-dimethyl-1,3-butadiene, myrcene, 6,6-dimethyl-fulvene, hexadiene, cyclopentadiene, and piperylene, and other monomers (e.g. alkylstyrenes) such as disclosed in U.S. Pat. No. 5,506,316. In one or more embodiments, the olefinic-based elastomers include isoolefin-based elastomers such as isobutylene-based elastomers. For convenience, the term "rubber" may be used herein to refer to the olefinic-based elastomer.

The term "isoolefin-based elastomer" refers to (a) copolymers derived from the polymerization of at least one C₄ to C₇ isoolefin monomer and at least one multiolefin monomer, (b) homopolymers derived from the polymerization of C₄ to C₇ isoolefin monomers, and (c) random copolymers derived from the polymerization of C₄ to C₇ isoolefins and alkyl styrene.

Types of "isoolefin-based elastomers" include "isobutylene-based elastomers," which refer elastomers including at least 70 mol % repeat units from isobutylene. These polymers can be described as random copolymers of a C₄ isomonoolefin derived unit, such as an isobutylene derived unit, and at least one other polymerizable unit. In particular embodiments, the isobutylene-based elastomer may comprise at least 70 mol % isobutylene derived units. One embodiment of the isobutylene-based butyl rubber polymer useful in the invention is obtained by reacting 92 to 99.5 wt % of isobutylene with 0.5 to 8 wt % isoprene, or 95 to 99.5 wt % isobutylene with 0.5 wt % to 5.0 wt % isoprene in yet another embodiment. In other embodiments, isobutylene-based elastomers include copolymers including at least 80%, more alternatively at least 86.5 wt % of the isoolefin units and about 5% to about 20 wt % alkylstyrene units. In one embodiment, these polymers may be a random elastomeric copolymer derived from the polymerization of C₄ to C₇ olefins and an alkylstyrene containing at about 5% to about 14 wt % alkylstyrene. The poly(isobutylene-co-p-alkylstyrene) polymers are also referred to as IMSM polymers. Still other isobutylene-based elastomers include terpolymers comprising the isoolefin and two multiolefins wherein the multiolefins have different backbone structures prior to polymerization. These terpolymers include both block and random terpolymers of C₄ to C₈ isoolefin derived units, C₄ to C₁₄ multiolefin derived units, and alkylstyrene derived units. One such terpolymer may be formed from isobutylene, isoprene, and alkylstyrene (preferably methylstyrene) monomers. Another suitable terpolymer may be polymerized from isobutylene, cyclopentadiene, and alkylstyrene monomers. These terpolymers may be obtained under cationic polymerization conditions.

Non-limiting specific examples of isobutylene-based elastomers include poly(isobutylene), butyl rubber (isoprene-isobutylene rubber, "IIR"), branched ("star-branched") butyl rubber, star-branched polyisobutylene rubber, block terpolymers of isoprene-isobutylene-styrene, random copolymers of isobutylene and para-methylstyrene, random terpolymers of isobutylene, isoprene, and para-methylstyrene, and mixtures thereof.

The term "butyl rubbers" may be used to refer to certain copolymers of isoolefin(s) and multiolefin(s). For these copolymers, the isoolefin derived content may be in a range from 70 to 99.5 wt % of the total monomer derived units in one embodiment, and 85 to 99.5 wt % in another embodiment. The total multiolefin derived content in the copolymer may be present in the range of mixture from 30 to 0.5 wt % in one embodiment, and from 15 to 0.5 wt % in another embodiment. In yet another embodiment, from 12 to 0.5 wt % of the polymer is multiolefin derived units. In yet another embodiment, from 8 to 0.5 wt % of the polymer is multiolefin derived units. Herein for the purpose of this invention, multiolefin refers to any monomer having two or more double bonds. In one or more embodiments, the multiolefin is any monomer comprising two conjugated double bonds and may be an aliphatic or aromatic monomer. As used herein, and unless otherwise stated, the terms "butyl rubber" and "isobutylene based elastomer" may be used interchangeably when describing the processes of the invention since the skilled person will recognize that the practice of this invention is equally applicable to all isobutylene-based elastomers while most commercial processes produce what is most understood to be butyl rubber.

The term "plasticizing liquid" refers a hydrocarbon liquid or oil that is capable of swelling or softening the elastomers described herein. The plasticizing liquids desirably do not appreciably react with the elastomers or halogenating agents described herein. In one or more embodiments, plasticizing liquids may include hydrocarbon liquids having the formula CₓH_{y}, wherein x is 4 to 20, and y is 12 to 42, such as hexane, isohexane, pentane, iso-pentane, butane, isobutane, and cyclohexane.

The term "halogenated rubber" refers to any elastomer, as defined herein, such as olefinic-based elastomer or an isobutylene-based elastomer that has been modified by the addition of a halogen atom, such as chlorine and/or bromine, to the elastomer. Reference may also be made to halogenated olefinic-based elastomer or halogenated isobutylene-based elastomer, or halogenated butyl rubber in the same context.

The term "bulk phase" for an elastomer means an elastomer, or an elastomer blended with a plasticizing liquid, in a solid phase having a kinetic viscosity under zero shear at room temperature in the range of 10³ to 10⁹ Pa-sec. In any embodiment of the invention, the bulk phase elastomer may alternatively have a kinetic viscosity under zero shear at room temperature in the range of 10⁴ to 10⁹ Pa-sec. The term "bulk phase" may also be used to refer to a polymer mass containing less than 30 wt% of solvent and/or diluent.

The term "neutralization compounds," which may also be referred to as "neutralizers," refers to those compounds that react or interact with reaction by-products from the processes of this invention for the purpose of preventing or minimizing undesirable attributes of these by-products. For example, neutralization compounds may be used to react or interact with hydrogen bromide. Exemplary neutralization compounds include, but are not limited to, alkali and alkaline earth carboxylates (e.g. calcium and sodium stearate), hydroxides (e.g. magnesium hydroxide), oxides (e.g. magnesium oxide), epoxides, epoxidized esters such as C₈-C₂₄ epoxidized esters, epoxidized soybean oil, and inorganic salts of organic acids.

The term "stabilization compounds," which may also be referred to as "stabilizers," refers to those compounds that can be introduced to the olefinic-based elastomers described herein for the purpose of preventing or minimizing undesirable reactions or interactions that the olefinic-based elastomers can undergo. For example, stabilizers may include antioxidants such as, but not limited to, hindered phenols such as butylated hydroxytoluene (BHT), secondary aromatic amines, benzofuranones, and hindered amine light stabilizers (HALS). Other stabilizers may include ionomer stabilizer(s), which refers to any organic proton donor such as carboxylic acids (e.g. fatty acids such as stearic acid), mineral and organic acids having pKa less than 9.0 (e.g. phenol, citric acid, monopotassium phosphate, and perchloric acid), and polymer resins with acidic functional groups. Still other stabilizers include free radical scavengers including sterically hindered nitroxyl ethers and sterically hindered nitroxyl radicals, such as those described in WO 2008/003605A1.

Embodiments of the present invention can be described with reference to the Figure, which shows a polymer halogenation system 11 including first extruder 20, first kneader vessel 40 downstream of first extruder 20 and in fluid communication with first extruder 20, second extruder 60 downstream of first kneader vessel 40 and in fluid communication with first kneader vessel 40, second kneader vessel 80 downstream of second extruder 60 and in fluid communication with second extruder 60, and third extruder 100 downstream of second kneader 80 and in fluid communication with second kneader 80. As shown in the Figure, the various components of system 11 are interconnected using appropriate conduit. Alternatively, two or more of the components may be directly connected to each other.

In one or more embodiments, first kneader vessel 40 and second kneader vessel 80 are adapted to process bulk-phase olefinic-based elastomer (e.g. an isobutylene-based rubber such as butyl rubber) in sequence. First kneader vessel 40, which may be referred to as reactor kneader 40, is adapted to serve as a reaction vessel for a reaction in which rubber is reacted with a halogenating agent. Second kneader vessel 80, which may be referred to as by-product removal kneader 80, is adapted to further process the halogenated rubber produced in first kneader vessel 40 and separate reaction byproducts from the halogenated rubber.

As indicated above, first and second kneader vessels 40 and 80 process bulk-phase olefinic-based elastomer. In one or more embodiments, the bulk-phase olefinic-based elastomer is substantially devoid of plasticizing liquid, where substantially devoid refers to that amount or less of plasticizing liquid that does not have an appreciable impact on the practice of this invention. In one or more embodiments, the bulk-phase olefinic-based elastomer includes not more than 40 wt %, in other embodiments not more than 30 wt %, in other embodiments not more than 20 wt %, in other embodiments not more than 10 wt %, in other embodiments not more than 5 wt %, and in other embodiments not more than 3 wt % plasticizing liquid.

First kneader vessel 40 is fed at inlet 42 by first extruder 20. The arrangement and operation of first extruder 20 is designed to accomplish several goals. To begin with, first extruder 20 is arranged and operated to convert the rubber, which may be fed to extruder 20 in the form of pellets or crumbs through inlet 22, into a compacted, continuous solid mass that occupies the entire cross-sectional area of at least a portion of conduit 30 feeding first kneader vessel 40 at inlet 42. As a result, the rubber being fed to first kneader vessel 40 via conduit 30 serves to seal first kneader vessel 40 at inlet 42.

In one or more embodiments, first extruder 20, which may be equipped with heating or cooling elements 26 is operated to modify the temperature of the rubber to a desired temperature for processing within first kneader vessel 40. In one or more embodiments, the heating or cooling elements may include heating/cooling jackets, which typically surround the exterior of the kneader, or internal mechanisms of the kneader, such as the shaft, through which heating/cooling fluids can be pumped. In one or more embodiments, the temperature is adjusted to form a cohesive mass of the rubber. In one or more embodiments, first extruder 20 adjusts the temperature of the rubber to a temperature of from about 20 to about 200 °C, in other embodiments from about 40 to about 150 °C, and in other embodiments from about 50 to about 80 °C.

In one or more embodiments, first extruder 20 is operated at a rate sufficient to feed the rubber to first kneader vessel 40. In one or more embodiments, first extruder 20, in conjunction with second extruder 60, as will be described in greater detail below, is operated at a rate sufficient to maintain the volume of rubber within first kneader vessel 40. Specifically, first extruder 20 sets the flow rate of rubber into first kneader vessel 40 and second extruder 60 regulates the flow of rubber out of first kneader vessel. In one or more embodiments, volume of material within first kneader vessel 40 is maintained at from about 10 to about 80 %, in other embodiments from about 20 to about 70 %, and in other embodiments from about 30 to about 50 % of the total internal volume of first kneader vessel 40 (i.e., the volumetric capacity of first kneader 40). Stated another way, a void space of from about 90 to about 20 %, in other embodiments from about 80 to about 30 %, and in other embodiments from about 70 to about 50 % is maintained within first kneader vessel 40. In one or more embodiments, the residence time of the rubber within first kneader vessel 40 is at least 2 minutes, in other embodiments at least 3 minutes, in other embodiments at least 4 minutes, and in other embodiments at least 5 minutes. In these or other embodiments, the residence time within first kneader vessel 40 is from about 3 to about 15 minutes, in other embodiments from about 4 to about 12 minutes, and in other embodiments from about 5 to about 10 minutes.

Embodiments of the invention are not necessarily limited by the construction of first extruder 20. For example, first extruder 20 may be a screw-type extruder, such as a single-screw extruder or a twin-screw extruder. In other embodiments, first extruder 20 may be a ring extruder or screw conveyor. In yet other embodiments, first extruder 20 may include a melt pump or gear pump.

In one or more embodiments, first extruder 20 may include one or more inlets 28 that may be used for the introduction of one or more additive materials into first extruder 20. Such additive materials may include neutralization compounds, stabilization compounds, or both neutralization and stabilization compounds. First extruder 20 may also include one or more inlets 29 for the introduction of plasticizing liquids.

As suggested above, first kneader vessel 40 receives rubber through inlet 42 and discharges halogenated rubber through outlet 44. In one or more embodiments, first kneader vessel 40 includes an inlet 47 for introducing halogenating agent (optionally together with a carrier gas) into first kneader vessel 40.

The halogenating agent is a chlorinating agent or a brominating agent. Examples of halogenating agents include, but are not limited to, bromine, chlorine, bromine chloride, sulfuryl bromide, 1,3-dibromo-5,5-dimethylhydantoin, iodobenzene bromide, sodium hypobromite, sulfur bromide and N-bromosuccinimide. In one or more embodiments, a carrier is used in conjunction with the halogenating agent. Useful carrier gases include, but are not limited to nitrogen, argon, carbon dioxide, and those gases that are substantially or fully halogenated (e.g. fluoro- and chloro- carbons and hydrofluoro- and hydrochloro- carbons).

As discussed above, first kneader vessel 40 processes the rubber while the rubber undergoes a reaction with a halogenating agent. In one or more embodiments, the halogenating agent is a gas-phase reactant that reacts with the rubber, which is in the bulk phase. In accordance with the preferred operation of the system, the reaction between the halogenating agent and the rubber takes place at the surface of the rubber.

In one or more embodiments, unreacted halogenating agent, gaseous by-products of the halogenating reaction, and carrier gases can also be removed at an outlet 49. One or more of these gases may also be recycled through a gas loop 48. In one or more embodiments, inlet 47 and outlet 49 form part of gas loop 48. In one or more embodiments, gas loop 48 can include an optional reactor 51 where undesirable by-product gases are neutralized and/or wherein by-product gases (e.g. HBr) are converted back to a halogenating agent (bromine).

First kneader vessel 40 may be equipped with heating and/or cooling elements 46 through which the temperature of the rubber within first kneader vessel 40 can be regulated. In one or more embodiments, the heating/cooling elements may include heating/cooling jackets, which typically surround the exterior of the kneader, or heating/cooling internal mechanisms of the kneader, such as the shaft, through which heating/cooling fluids that can be pumped. In one or more embodiments, the temperature of the rubber and/or halogenated rubber within first kneader vessel 40 is maintained at a temperature of from about 20 to about 200 °C, in other embodiments from about 40 to about 150 °C, and in other embodiments from about 50 to about 80 °C.

First kneader vessel 40 is a sealed vessel, which refers to a vessel that can be operated under increased pressures or under vacuum. In one more embodiments, first kneader vessel 40 is in fluid communication with a pressure regulating system 52 such as vacuum pump for decreasing the pressure or a compressor for increasing the pressure within first kneader vessel 40. Alternatively, if the halogenating agent is supplied in line 47 under pressure, an outlet pressure control valve may be used to regulate the first kneader vessel pressure. In one or more embodiments, first kneader vessel 40 is operated at pressures of from about 0.5 to about 10 atmospheres (50 to 1015 kPa), in other embodiments from about 0.8 to about 5 atmospheres (80 to 510 kPa), and in other embodiments from about 1 to about 2 atmospheres (100 to 205 kPa). In one or more embodiments, the temperature and pressure within first kneader vessel 40 is maintained to provide an environment in which a technologically useful amount of the gaseous halogenating agent(s) are maintained in the gas phase. For example, where the halogenating agent includes bromine, the skilled person appreciates that the concentration and pressure within the first kneader vessel 40 impacts the dew point of the bromine, and therefore the conditions within the first kneader vessel 40 are adjusted to maintain the bromine in the gaseous state. Likewise, in one or more embodiments, the temperature and pressure within first kneader vessel 40 are maintained to provide an environment in which a technologically useful amount of gaseous by-products of the halogenation reaction is maintained in the gas phase.

In order to facilitate the reaction between the rubber and the halogenating agent, first kneader vessel 40 is adapted to deform the rubber mass and expose unreacted rubber to the halogenating agent. Stated another way, the rubber mass within first kneader vessel 40 is disrupted and reoriented to thereby provide renewed surface of the solid rubber mass, thereby exposing unreacted rubber to the halogenating agent.

In one or more embodiments, the processing and facilitation of the halogenation reaction within first kneader vessel 40 is provided by an arrangement of kneading elements within first kneader vessel 40. In one or more embodiments, these kneading elements may include an intermeshing array of protrusions that extend, generally in a non-continuous manner, from one or more rotating shafts within first kneader vessel 40. In particular embodiments, first kneader vessel 40 may include fixed hooks and rotating paddles. Reactor 40 may be a single or dual shaft device. In other embodiments, first kneader vessel 40 includes complementary protrusions extending from two or more shafts. In one or more embodiments, the kneading elements of first kneading vessel 40 are adapted and operated to minimize accumulation of rubber or halogenated rubber on the inner surfaces of first kneading vessel 40 or the kneading elements of first kneading vessel 40. In other words, the kneading elements are adapted to be self-cleaning.

As with the first extruder 20, first kneader vessel 40 may include one or more inlets 41 that may be used to introduce plasticizing liquids and one or more inlets 45 that may be used to introduce additive compounds (e.g. stabilization and/or neutralization compounds) to the rubber within first kneader vessel 40.

In an alternative embodiment, the halogenation mechanism to be employed with the bulk phase elastomer in the first kneader vessel 40 may be adapted for free radical halogenation. This may be accomplished by maintaining the first kneader vessel 40 at the appropriate temperature to initiate and maintain the free radical halogenation. In another embodiment, the halogenation may be accomplished by photo initiation, e.g. UV, to complement thermal initiation. In yet another embodiment, the free radical halogenation may be accomplished using chemical free radical initiators, such as peroxides.

Again, rubber exits first kneader vessel 40 through outlet 44, which is in fluid communication with a second extruder 60. Second extruder 60 is adapted and operated to achieve several goals. To begin with, second extruder 60, which may also be referred to as discharge extruder 60, compacts and accumulates the halogenated butyl rubber product discharged from first kneader vessel 40 to fill a cross-sectional area of second extruder 60, which thereby provides a seal to outlet 44 of first kneader vessel 40. This seal serves several purposes: a) the seal maintains at least some of the gaseous reactants and byproducts within first kneader vessel 40, and b) the seal also provides a closure between high and low pressure elements of the system 11. As will be described in greater detail below, second kneader vessel 80 operates at lower pressures than first kneader vessel 40.

Also, second extruder 60 operates in conjunction with first extruder 20 to regulate the amount of rubber within first kneader vessel 40. In one or more embodiments, the rubber within first kneader vessel 40 is maintained in a steady state, which refers to maintaining the volume of the rubber within first kneader vessel 40 with little variance over time once the system 11 has reached operational parameters. In one or more embodiments, the volume of rubber within first kneader vessel 40 is maintained within volumetric differentials of less than 10%, in other embodiments less than 5%, and in other embodiments less than 1% of the total volume of material within first kneader vessel 40.

Second extruder 60 is in fluid communication with second kneader vessel 80 and feeds halogenated rubber to second kneader vessel 80 via inlet 82 through conduit 70. Again, through the accumulation and compaction of the halogenated rubber within second extruder 60, the entire cross-sectional area of at least a portion of conduit 70 feeding second kneader vessel 80 at inlet 82 is filled, thereby creating a seal to inlet 82 of second kneader vessel 80.

Second extruder 60 is operated at a rate sufficient to feed halogenated rubber to second kneader vessel 80 and maintain the volume of halogenated rubber within second kneader vessel 80 at desired levels. In one or more embodiments, second extruder 60, in conjunction with third extruder 100, which will be described in greater detail below, is operated at a rate sufficient to maintain the volume of halogenated rubber within second kneader vessel 80 at from about 10 to about 80 %, in other embodiments from about 20 to about 70 %, and in other embodiments from about 30 to about 50 % of the total internal volume of second kneader vessel 80 (i.e., the volumetric capacity of second kneader vessel 80). Stated another way, a void space of from about 90 to about 20 %, in other embodiments from about 80 to about 30 %, and in other embodiments from about 70 to about 50 % is maintained within second kneader vessel 80. In one or more embodiments, the residence time of the rubber within second kneader vessel 80 is at least 2 minutes, in other embodiments at least 3 minutes, in other embodiments at least 4 minutes, and in other embodiments at least 5 minutes. In these or other embodiments, the residence time within second kneader vessel 80 is from about 3 to about 15 minutes, in other embodiments from about 4 to about 12 minutes, and in other embodiments from about 5 to about 10 minutes.

Embodiments of the invention are not necessarily limited by the construction of second extruder 60. For example, second extruder 60 may be a screw-type extruder, such as a single-screw extruder or a twin-screw extruder. In other embodiments, second extruder 60 may be a ring extruder or screw conveyor. In yet other embodiments, second extruder 60 may include a melt pump or gear pump.

In one or more embodiments, second extruder 60 may include one or more inlets 65 to introduce additive compounds (e.g. stabilization and/or neutralization compounds) into second extruder 60. Also, second extruder 60 may include one or more inlets 66 to introduce plasticizing liquids into second extruder 60.

Second kneader vessel 80 may be equipped with heating and/or cooling elements 86 through which the temperature of the halogenated rubber within second kneader vessel 80 can be regulated. In one or more embodiments, the heating/cooling elements may include heating/cooling jackets, which typically surround the exterior of the kneader, or heating/cooling internal mechanisms of the kneader, such as the shaft, through which heating/cooling fluids that can be pumped. In one or more embodiments, the temperature of the halogenated rubber within second kneader vessel 80 is maintained at a temperature of from about 20 to about 200 °C, in other embodiments from about 40 to about 150 °C, and in other embodiments from about 50 to about 80 °C.

In one or more embodiments, second kneader vessel 80 is a sealed vessel, which refers to a vessel that can be operated under increased pressures or under vacuum. In one or more embodiments, second kneader vessel 80 is in fluid communication with a pressure regulating system 92 such as vacuum pump for decreasing the pressure or a compressor for increasing the pressure within second kneader vessel 80. Alternatively, the pressure may be regulated in the second kneader vessel 80 by introducing the rubber under pressure and controlling the exit flow rate of the rubber or by introducing a gas under pressure and controlling the internal pressure via an outlet pressure control valve. In one or more embodiments, second kneader vessel 80 is operated at pressures of less than 1 atmosphere (100 kPa), in other embodiments less than 0.5 atmosphere (50 kPa), in other embodiments less than 0.1 atmosphere (10 kPa), in other embodiments less than 0.07 atmosphere (7 kPa), in other embodiments less than 0.05 atmosphere (5 kPa), and in other embodiments less than 0.03 atmospheres (3 kPa). In one or more embodiments, second kneader vessel 80 is operated at pressures of from about 0.02 to about 2 atmospheres (2 to 205 kPa), in other embodiments from about 0.03 to about 1 atmosphere (3 to 100 kPa), and in other embodiments from about 0.05 to about 0.5 atmospheres (5 to 50 kPa).

In one or more embodiments, the temperature and pressure within second kneader vessel 80 is maintained to provide an environment in which a technologically useful amount of the gaseous by-products of the halogenations reaction are maintained in the gas phase.

In one or more embodiments, second kneader vessel 80 includes outlet 88 through which gaseous by-products of the halogenations reaction, as well as other transfer gases (including any of the previously discussed transfer gases e.g. nitrogen, argon, carbon dioxide, fluoro- and chloro- carbons and hydrofluoro- and hydrochloro- carbons) can be removed from second kneader vessel 80. In one or more embodiments, second kneader vessel 80 also includes optional gas inlet 90 through which transfer gases, such as nitrogen, can be injected into second kneader vessel 80. These transfer gases may be used to facilitate removal of by-product gases through outlet 88. One or more of these gases may also be recycled through a gas loop 91. In one or more embodiments, inlet 90 and outlet 88 form part of gas loop 91. In one or more embodiments, gas loop 91 can include an optional scrubber 93 where undesirable by-product gases are scavenged. In these or other embodiments, gas loop 91 may include a regeneration system 93 where by-product gases (e.g. HBr) are converted back to a halogenating agent (e.g. bromine), and the regenerated halogenating agent (e.g. bromine) may be routed back to first kneader vessel 40 (not illustrated).

As discussed above, second kneader vessel 80 processes the halogenated rubber in order to separate by-product gases from the halogenated butyl rubber product. As the skilled person appreciates, these by-product gases may include hydrogen halides such as hydrogen bromide, hydrogen chloride, and halogenated solvents or diluents.

In order to facilitate the separation of the by-product gases from the halogenated butyl rubber, second kneader vessel 80 is adapted to deform the halogenated rubber mass and expose and thereby promote the release of gaseous materials (e.g. by-product gases or volatized plasticizer/organics used in the system) entrapped or entrained with the solid halogenated rubber mass. Stated another way, the halogenated rubber mass within second kneader vessel 80 is disrupted and reoriented to thereby provide renewed surface of the bulk halogenated rubber mass, thereby exposing the gaseous materials entrapped or entrained within the bulk halogenated rubber to the gaseous phase within second kneader vessel 80.

In one or more embodiments, the processing and facilitation of the separation of by-product gases from the halogenated rubber within second kneader vessel 80 is provided by an arrangement of kneading elements within second kneader vessel 80. In one or more embodiments, these kneading elements may include an intermeshing array of protrusions that extend, generally in a non-continuous manner, from one or more rotating shafts within second kneader vessel 80. In particular embodiments, second kneader vessel 80 may include fixed hooks and rotating paddles. In other embodiments, second kneader vessel 80 includes complementary protrusions extending from two or more shafts. In one or more embodiments, the kneading elements of second kneader vessel 80 are adapted and operated to minimize accumulation of halogenated butyl rubber on the inner surfaces of second kneader vessel 80 or the kneading elements of second kneader vessel 80. In other words, the kneading elements are adapted to be self-cleaning.

In any embodiment, second kneader vessel 80 may include one or more inlets 94 that may be used to introduce one or more additive compounds (e.g. stabilization and/or neutralization compounds) into second kneader vessel 80. Second kneader vessel 80 may include one or more inlets 95 that may be used to introduce one or more plasticizing liquids into second kneader 80.

Halogenated rubber exits second kneader vessel 80 through outlet 84, which is in fluid communication with a third extruder 100. Third extruder 100 is adapted and operated to achieve several goals. To begin with, third extruder 100 compacts and accumulates the halogenated rubber product discharged from second kneader vessel 80 to thereby fill a cross-sectional area of third extruder 100, which thereby provides a seal to outlet 84 of second kneader vessel 80. This seal serves several purposes. For example, the seal maintains at least some of the gaseous by-products within second kneader vessel 80. The seal also provides a closure between high and low pressure elements of the process. For example, second kneader vessel 80 operates at lower pressures than third extruder 100.

Third extruder 100 operates in conjunction with second extruder 60 to regulate the amount of halogenated rubber within second kneader vessel 80. In one or more embodiments, the halogenated rubber within second kneader vessel 80 is maintained in a steady state, which refers to maintaining the volume of the halogenated rubber within second kneader vessel 80 with little variance. In one or more embodiments, the volume of halogenated rubber within second kneader vessel 80 is maintained within volumetric differentials of less than 10%, in other embodiments less than 5%, and in other embodiments less than 1% of the total volume of material within second kneader vessel 80.

Embodiments of the invention are not necessarily limited by the construction of the third extruder 100. For example, third extruder 100 may be a screw-type extruder, such as a single-screw extruder or a twin-screw extruder. In other embodiments, third extruder 100 may be a ring extruder or screw conveyor. In yet other embodiments, third extruder 100 may include a melt pump or gear pump.

In any embodiment, third extruder 100 may include one or more inlets 108 that may be used to introduce additive materials (e.g. stabilization and/or neutralization compounds) into third extruder 100. Also, third extruder 100 may include one or more inlets 110 that may be used to introduce plasticizing liquids to the halogenated rubber within third extruder 100. The third extruder 100 may also include outlets for the removal of any volatile materials, similar to the removal of gaseous material from the second kneader vessel 80. As with the first and second extruders 20, 60, the third extruder 100 may be provided with heating and cooling elements (not illustrated) to maintain a desired thermal profile of the halogenated elastomer as it is removed from the second kneader vessel 80 and sent downstream.

To prevent potential corrosion of the system due to reactions between water and any of the halide elements or halide by-products in the system, the introduction of water is specifically excluded from the system. Any amount of water present in the system is nothing more than a contamination amount of not more than 10,000 ppm. With not more than a contaminant amount of water and the absence of any intentional introduction of water, the illustrated system, from the first extruder 20 through to removal of substantially all of the free halides or halide by-product gases from the system, e.g. the third extruder 100, is a non-aqueous system.

In one or more embodiments, third extruder 100 feeds halogenated rubber to further downstream finishing processes. In one or more embodiments, downstream finishing may include devolatizing of the halogenated elastomer, drying, pelletizing and/or baling, and packaging operations of the type known in the art.

In practicing the halogenating system and method disclosed with isobutylene based elastomers, the halogenated rubber obtained from third extruder 100 will contain 0.05 to 5 wt% of the halogen or alternatively 0.1 to 2.75 wt% halogen. In any embodiment, the halogenated isobutylene based elastomer may contain 92 to 99.5 wt% isobutylene derived monomers, 0.5 to 8 wt% isoprene derived monomers, and 0.05 to 2.75 wt% bromine or chlorine. In any embodiment of the disclosed process, the halogenated isobutylene based elastomer includes random copolymers containing at least 80%, more alternatively at least 86.5 wt% of isobutylene derived units, about 5 to 20 wt% alkylstyrene derived units, and about 0.5 to 2.5 wt% of the halogen.

The halogenated elastomers produced by the disclosed system may be used in compounded formulations to make any number of articles. Exemplary article include tire curing bladders, tire innerliners, tire innertubes, air sleeves, hoses, and hose components in multilayer hoses. Other useful goods that can be made using compositions including the halogenated elastomers made by the disclosed process include air spring bladders, seals, molded goods, cable housing, and other articles disclosed in THE VANDERBILT RUBBER HANDBOOK, P 637-772 (Ohm, ed., R.T. Vanderbilt Company, Inc. 1990).

## Claims

1. A process for halogenating an olefin-based elastomer while the olefinic-based elastomer is in the bulk phase using a system (11) comprising:
(i) a first extruder (20);
(ii) a first kneader vessel (40) having an inlet (42) and an outlet (44) downstream of said first extruder (20) and in fluid communication with said first extruder (20) via a conduit (30) and the inlet (42), where said first kneader (40) vessel is a sealed vessel that is adapted to maintain gaseous reactants that are introduced into said kneader vessel;
(iii) a second extruder (60) downstream of said first kneader vessel (40) and in fluid communication with the outlet (44) of said first kneader vessel (40);
(iv) a second kneader vessel (80) downstream of said second extruder (60) and in fluid communication with said second extruder (60); and
(v) a third extruder (100) downstream of said second kneader vessel (80) and in fluid communication with said second kneader vessel (80);
the process comprising:
reacting an olefinic-based elastomer substantially in the bulk phase with a halogenating agent within the first kneader reactor to produce halogenated olefinic-based elastomer and by-products of a halogenation reaction, wherein said first extruder (20) is arranged and operated to convert the olefin-based elastomer into a compacted, continuous solid mass that occupies the entire cross-sectional area of at least a portion of the conduit (30), thereby serving to seal the first kneader vessel (40) at the inlet (42) and wherein said second extruder (60) is adapted and operated to compact and accumulate the halogenated olefinic-based elastomer product discharged from the first kneader vessel (40) to fill a cross-sectional area of the second extruder (60), thereby providing a seal to the outlet (44) of the first kneader vessel (40); and separating the halogenated olefinic-based elastomer from at least a portion of the by-products of the halogenation reaction within the second kneader vessel,
wherein said second kneader vessel (80) operates at a lower pressure than said first kneader vessel (40) and wherein any water present is present at not more than 10,000 ppm.

2. The process of claim 1, where said first extruder (20) is a screw extruder adapted to compact and heat olefinic-based elastomer.

3. The process of any of claims 1 or 2, where said first kneader vessel (40) is in fluid communication with a gas loop (48) adapted to introduce gaseous reactants into said kneader vessel and remove gaseous by-products from said kneader vessel.

4. The process of claim 3, where said gas loop (48) includes reactors for the neutralization of said gaseous by-products or the regeneration of gaseous reactants from said gaseous by-products.

5. The process of any of claims 1 to 4, where said first kneader vessel (40) is adapted to deform and expose unreacted surface area of olefinic-based elastomer within said first kneader vessel.

6. The process of any of claims 1 to 5, where said second kneader vessel (80) is a sealed vessel that is adapted to contain gases within said second kneader vessel or elements in fluid communication with said second kneader vessel.

7. The process of any of claims 1 to 6, where said second kneader vessel (80) is adapted to deform and expose surface area of olefinic-based elastomer within said second kneader vessel and thereby release entrained gases.

8. The process of any of claims 1 to 7, where a) said first kneader vessel (40) or second kneader vessel (80) or b) both first and second kneader vessels include an intermeshing array of hooks and rotating paddles.

9. The process of any of claims 1 to 8, where said step of reacting takes place when the olefinic-based elastomer is at a temperature of from 20 to 200 °C and a pressure of from 0.506 bar to 10.13 bar (0.5 to 10 atmospheres).

10. The process of any of claims 1 to 9, where said step of separating takes place at a temperature of from 20 to 200 °C and a pressure of from 0.0203 to 2.027 bar (0.02 to 2 atmospheres).

## Patentansprüche

1. Verfahren zum Halogenieren von Elastomer auf Olefinbasis, während sich das Elastomer auf olefinischer Basis in der Massephase befindet, unter Verwendung eines Systems (11), das
(i) einen ersten Extruder (20),
(ii) ein erstes Knetgefäß (40) mit einem Einlass (42) und einem Auslass (44) nachgeordnet zu dem ersten Extruder (20) und über eine Rohrleitung (30) und den Einlass (42) in Fließverbindung mit dem ersten Extruder (20), wobei das erste Knetgefäß (40) ein gedichtetes Gefäß ist, das eingerichtet ist, um gasförmige Reaktanten, die in das Knetgefäß eingebracht werden, dort zu halten,
(iii) einen zweiten Extruder (60) nachgeordnet zu dem ersten Knetgefäß (40) und in Fließverbindung mit dem Auslass (44) des ersten Knetgefäßes (40),
(iv) ein zweites Knetgefäß (80) nachgeordnet zu dem zweiten Extruder (60) und in Fließverbindung mit dem zweiten Extruder (60), und
(v) einen dritten Extruder (100) nachgeordnet zu dem zweiten Knetgefäß (80) und in Fließverbindung mit dem zweiten Knetgefäß (80) umfasst,
wobei das Verfahren umfasst:
Umsetzen von Elastomer auf olefinischer Basis im Wesentlichen in der Massenphase mit Halogenierungsmittel innerhalb des ersten Knetreaktors, um halogeniertes Elastomer auf olefinischer Basis und Nebenprodukte einer Halogenierungsreaktion zu produzieren, wobei der erste Extruder (20) angeordnet und betrieben wird, um das Elastomer auf Olefinbasis in eine verdichtete kontinuierliche feste Masse umzuwandeln, die die gesamte Querschnittfläche von mindestens einem Anteil der Rohrleitung (30) in Anspruch nimmt, wodurch sie zur Abdichtung des ersten Knetgefäßes (40) am Einlass (42) dient, und wobei der zweite Extruder (60) so eingerichtet und betrieben wird, dass er das halogenierte Elastomerprodukt auf olefinischer Basis, das aus dem ersten Knetgefäß (40) ausgetragen wird, verdichtet und sammelt, um eine Querschnittfläche des zweiten Extruders (60) zu füllen, wodurch dem Auslass (44) des ersten Knetgefäßes (40) eine Abdichtung bereitgestellt wird, und
Trennen des halogenierten Elastomers auf olefinischer Basis von mindestens einem Anteil der Nebenprodukte der Halogenierungsreaktion innerhalb des zweiten Knetgefäßes,
wobei das zweite Knetgefäß (80) mit einem niedrigeren Druck als das erste Knetgefäß (40) arbeitet, und wobei jegliches vorhandene Wasser in nicht mehr als 10 000 ppm vorhanden ist.

2. Verfahren nach Anspruch 1, bei dem der erste Extruder (20) ein Schneckenextruder ist, der eingerichtet ist, um Elastomer auf olefinischer Basis zu verdichten und zu erwärmen.

3. Verfahren nach einem der Ansprüche 1 oder 2, bei dem das erste Knetgefäß (40) in Fließverbindung mit einer Gasschleife (48) ist, die eingerichtet ist, um gasförmige Reaktanten in das Knetgefäß einzubringen und gasförmige Nebenprodukte aus dem Knetgefäß zu entfernen.

4. Verfahren nach Anspruch 3, bei dem die Gasschleife (48) Reaktoren zur Neutralisierung der gasförmigen Nebenprodukte oder zur Regeneration von gasförmigen Reaktanten aus den gasförmigen Nebenprodukten einschließt.

5. Verfahren nach einem der Ansprüche 1 bis 4, bei dem das erste Knetgefäß (40) eingerichtet ist, um nicht-umgesetzte Oberfläche von Elastomer auf olefinischer Basis innerhalb des ersten Knetgefäßes zu verformen und zu exponieren.

6. Verfahren nach einem der Ansprüche 1 bis 5, bei dem das zweite Knetgefäß (80) ein abgedichtetes Gefäß ist, das eingerichtet ist, um Gase innerhalb des zweiten Knetgefäßes oder Elemente in Fließverbindung mit dem zweiten Knetgefäß zu enthalten.

7. Verfahren nach einem der Ansprüche 1 bis 6, bei dem das zweite Knetgefäß (80) eingerichtet ist, um Oberfläche von Elastomer auf olefinischer Basis innerhalb des zweiten Knetgefäßes zu verformen und zu exponieren und dadurch mitgerissene Gase freizusetzen.

8. Verfahren nach einem der Ansprüche 1 bis 7, bei dem a) das erste Knetgefäß (40) oder das zweite Knetgefäß (80) oder b) sowohl das erste als auch das zweite Knetgefäß eine ineinander greifende Gruppierung von Haken und rotierenden Paddeln einschließt bzw. einschließen.

9. Verfahren nach einem der Ansprüche 1 bis 8, bei dem der Reaktionsschritt stattfindet, wenn sich das Elastomer auf olefinischer Basis auf einer Temperatur von 20 bis 200°C und einem Druck von 0,506 bar bis 10,13 bar (0,5 bis 10 Atmosphären) befindet.

10. Verfahren nach einem der Ansprüche 1 bis 9, bei dem der Trennschritt bei einer Temperatur von 20 bis 200°C und einem Druck von 0,0203 bis 2,027 bar (0,02 bis 2 Atmosphären) stattfindet.

## Revendications

1. Procédé d'halogénation d'un élastomère à base d'oléfine pendant que l'élastomère à base d'oléfine est dans la phase volumique au moyen d'un système (11) comprenant :
(i) une première extrudeuse (20) ;
(ii) une première cuve de malaxage (40) ayant une entrée (42) et une sortie (44) en aval de ladite première extrudeuse (20) et en communication fluidique avec ladite première extrudeuse (20) par le biais d'une conduite (30) et de l'entrée (42), ladite première cuve de malaxage (40) étant une cuve scellée qui est adaptée pour y maintenir des réactifs gazeux qui sont introduits dans ladite cuve de malaxage ;
(iii) une deuxième extrudeuse (60) en aval de ladite première cuve de malaxage (40) et en communication fluidique avec la sortie (44) de ladite première cuve de malaxage (40) ;
(iv) une deuxième cuve de malaxage (80) en aval de ladite deuxième extrudeuse (60) et en communication fluidique avec ladite deuxième extrudeuse (60) ; et
(v) une troisième extrudeuse (100) en aval de ladite deuxième cuve de malaxage (80) et en communication fluidique avec ladite deuxième cuve de malaxage (80) ;
le procédé comprenant :
la réaction d'un élastomère à base d'oléfine en grande partie dans la phase volumique avec un agent d'halogénation à l'intérieur du premier réacteur de malaxage pour produire un élastomère à base d'oléfine halogéné et des sous-produits d'une réaction d'halogénation, ladite première extrudeuse (20) étant agencée et utilisée pour transformer l'élastomère à base d'oléfine en une masse solide compactée, continue qui occupe l'aire de section transversale entière d'au moins une partie de la conduite (30), servant ainsi à sceller la première cuve de malaxage (40) à l'entrée (42), et ladite deuxième extrudeuse (60) étant adaptée et utilisée pour compacter et accumuler le produit élastomère à base d'oléfine halogéné déchargé de la première cuve de malaxage (40) pour remplir une aire de section transversale de la deuxième extrudeuse (60), appliquant ainsi un joint d'étanchéité à la sortie (44) de la première cuve de malaxage (40) ; et
la séparation de l'élastomère à base d'oléfine halogéné d'au moins une partie des sous-produits de la réaction d'halogénation à l'intérieur de la deuxième cuve de malaxage,
dans lequel ladite deuxième cuve de malaxage (80) fonctionne à une pression plus basse que ladite première cuve de malaxage (40) et dans lequel toute l'eau présente est présente à pas plus de 10 000 ppm.

2. Procédé de la revendication 1, dans lequel ladite première extrudeuse (20) est une extrudeuse à vis adaptée pour compacter et chauffer l'élastomère à base d'oléfine.

3. Procédé de l'une quelconque des revendications 1 et 2, dans lequel ladite première cuve de malaxage (40) est en communication fluidique avec une boucle de gaz (48) adaptée pour introduire des réactifs gazeux dans ladite cuve de malaxage et retirer des sous-produits gazeux de ladite cuve de malaxage.

4. Procédé de la revendication 3, dans lequel ladite boucle de gaz (48) comporte des réacteurs pour la neutralisation desdits sous-produits gazeux ou la régénération de réactifs gazeux à partir desdits sous-produits gazeux.

5. Procédé de l'une quelconque des revendications 1 à 4, dans lequel ladite première cuve de malaxage (40) est adaptée pour déformer et exposer une région de surface n'ayant pas réagi d'élastomère à base d'oléfine à l'intérieur de ladite première cuve de malaxage.

6. Procédé de l'une quelconque des revendications 1 à 5, dans lequel ladite deuxième cuve de malaxage (80) est une cuve scellée qui est adaptée pour contenir des gaz à l'intérieur de ladite deuxième cuve de malaxage ou des éléments en communication fluidique avec ladite deuxième cuve de malaxage.

7. Procédé de l'une quelconque des revendications 1 à 6, dans lequel ladite deuxième cuve de malaxage (80) est adaptée pour déformer et exposer une région de surface d'élastomère à base d'oléfine à l'intérieur de ladite deuxième cuve de malaxage et libérer ainsi des gaz entraînés.

8. Procédé de l'une quelconque des revendications 1 à 7, dans lequel a) ladite première cuve de malaxage (40) ou deuxième cuve de malaxage (80) ou b) à la fois la première et la deuxième cuve de malaxage comportent un réseau enchevêtré de crochets et de pales rotatives.

9. Procédé de l'une quelconque des revendications 1 à 8, dans lequel ladite étape de réaction a lieu quand l'élastomère à base d'oléfine est à une température allant de 20 à 200 °C et une pression allant de 0,506 bar à 10,13 bar (0,5 à 10 atmosphères).

10. Procédé de l'une quelconque des revendications 1 à 9, dans lequel ladite étape de séparation a lieu à une température allant de 20 à 200 °C et une pression allant de 0,0203 bar à 2,027 bar (002 à 2 atmosphères).
